(19) Europäisches Patentamt

European Patent Office

Office européen des brevets

(11) **EP 1 293 376 B1**

(12) **FASCICULE DE BREVET EUROPEEN**

(45) Date de publication et mention
de la délivrance du brevet:
**05.07.2006 Bulletin 2006/27**

(51) Int Cl.:
*B60W 10/02* (2006.01)     *B60W 10/06* (2006.01)
*B60W 10/10* (2006.01)

(21) Numéro de dépôt: **02292154.8**

(22) Date de dépôt: **02.09.2002**

(54) **Stratégie de réembrayage anticipée pendant les changements de rapport montant des transmissions automatisées**

Verfahren zum vorgezogenen Einkuppeln während des Hochschaltens automatisierter Getriebe

Strategy for early clutch reengagement while shifting up automatised gearboxes

(84) Etats contractants désignés:
**BE DE ES GB IT**

(30) Priorité: **14.09.2001 FR 0111913**

(43) Date de publication de la demande:
**19.03.2003 Bulletin 2003/12**

(73) Titulaire: **Renault s.a.s.**
**92100 Boulogne Billancourt (FR)**

(72) Inventeurs:
• **Desreumaux, Laurent**
**92210 Saint-Cloud (FR)**
• **Sall, Bobo**
**75020 Paris (FR)**

(56) Documents cités:
EP-A- 1 201 482          WO-A-89/10282
FR-A- 2 581 058          FR-A- 2 793 857
FR-A- 2 803 254          US-A- 4 646 891

**Description**

La présente invention concerne les transmissions automatisées, et plus particulièrement leur comportement lors des changements de rapport montant. Plus précisement, elle a pour objet les transmissions automatisées munies d'un embrayage d'entrée et placée sous le contrôle d'un calculateur.

Dans ce type de transmission, les changements de rapports sont réalisés par définition à rupture de couple, contrairement aux boîtes de vitesse automatiques permettant des passages sous couple, au moins pour les passages montants. Il peut en résulter pour le conducteur et ses passagers une sensation d'à-coups.

Un tel désagrément se traite en veillant à un écart minime entre le couple en sortie d'embrayage et le couple délivré par le moteur.

La publication MERCEDES DE 19616 960 traite à ce sujet d'un dispositif d'embrayage automatisé pendant le « décollage » (démarrage du véhicule) ou le passage de vitesse, dans une transmission associée à un moteur DIESEL. La publication concerne un procédé pour le réglage d'un embrayage automatisé pour un véhicule à moteur à combustion, pendant le « décollage » et/ou le passage de rapport, qui comprend une régulation du régime moteur. Ce dernier dépend du couple d'explosion et est régulé en correspondance avec la position de la pédale d'accélérateur, de la vitesse du véhicule, des consignes de vitesse et du rapport engagé. Dans un passage montant, le moteur n'atteignant pas suffisamment rapidement la nouvelle vitesse de rotation plus lente désirée, sous l'action de son inertie, l'embrayage est utilisé de telle manière qu'il transmette un couple prédéterminé jusqu'à synchronisation de la vitesse du moteur à celle du primaire de la boîte pour le nouveau rapport.

Ce procédé comprend en plus une régulation du couple d'embrayage, qui gère ce couple en fonction de la différence entre une consigne liée de la position de la pédale d'accélérateur et la valeur réelle du couple aux roues dérivé du couple moteur. Lorsque les vitesses du moteur et du primaire boîte sont presque ou totalement synchrones, la régulation de couple de l'embrayage est terminée et l'embrayage peut être fermé totalement et rapidement, de manière pilotée. Dans ce temps, le couple d'entraînement du moteur est rendu à l'influence de la pédale et au comportement de la transmission.

Grâce à ce procédé connu, les changements de rapport s'effectuent sans à coups. Toutefois, on ne parvient pas à diminuer de façon significative les temps de rupture de couple, second objectif que les constructeurs se fixent aujourd'hui.

Pour atteindre cet objectif, l'invention consiste en une stratégie de réembrayage anticipée, lors des changements de rapport montants, au moyen d'un rapide rétablissement de l'accélération du véhicule, après l'engagement du rapport cible. En effet, le réembrayage anticipé permet de réduire notablement la sensation de longueur de la rupture de couple et consiste à rétablir le plus rapidement possible, après l'engagement du rapport à atteindre, le couple de traction du véhicule par une fermeture contrôlée de l'embrayage et une remise du couple moteur pendant que l'embrayage est encore glissant.

La solution proposée consiste donc à piloter conjointement le moteur thermique et l'embrayage en vue de rétablir rapidement l'accélération du véhicule dans un premier temps, puis à contrôler le glissement de l'embrayage pour que l'annulation du glissement soit faite sans à-coups. L'annulation du glissement de l'embrayage correspond à l'arrivée du régime moteur au synchronisme.

Le premier objectif, un rétablissement rapide de l'accélération du véhicule, impose de faire croître rapidement le couple transmissible par l'embrayage car lorsque l'embrayage est glissant,

$$Croues = Cemb * Rboite * Rdesc * \eta$$

Croues = couple roues,
Cemb = couple transmissible par l'embrayage,
Rboîte = rapport de boîte,
Rdesc = rapport de la descente,
$\eta$ = rendement de la boîte de vitesse.

Le second objectif est l'annulation du glissement de l'embrayage sans à-coup. Lorsque le glissement s'annule, le couple en sortie d'embrayage passe brutalement du couple transmissible par l'embrayage au couple délivré par le moteur. L'écart entre ces deux couples se traduit par un à-coup de couple aux roues au moment de l'annulation du glissement suivi de rebonds.

Pour éviter cela, il faut minimiser l'écart entre le couple transmissible par l'embrayage et le couple moteur, ce qui revient à veiller à avoir une accélération du régime moteur proche de zéro lors de l'annulation du glissement, comme le montre l'équation de la dynamique :

EP 1 293 376 B1

$$Cmot - Cemb = Jmot * \frac{d\omega mot}{dt}$$

Cemb= couple transmissible par l'embrayage,
Cmot = couple moteur,
ωmot = régime moteur,
Jmot = inertie du moteur.

L'invention porte sur un procédé de changement de rapport montant sur une transmission automatisée munie d'un embrayage d'entrée et placée sous le contrôle d'un calculateur, comprenant une phase initiale de débrayage, une phase de passage de vitesse et une phase de réembrayage. Cette dernière est caractérisée en ce que ladite phase de réembrayage comprend une première étape pendant laquelle se déroulent une fermeture partielle rapide de l'embrayage et une croissance du couple moteur, ce qui entraîne le rétablissement de l'accélération, et une deuxième étape de contrôle durant laquelle le glissement de l'embrayage est régulé par une action sur les couples fourni par le moteur et transmis par l'embrayage.

Selon une autre caractéristique de l'invention, l'embrayage et le moteur sont pilotés simultanément pendant la première étape de la phase de réembrayage de façon à rétablir rapidement l'accélération ou le couple de traction du véhicule, dès que le rapport N+1 ou N+2 est engagé.

Selon une autre caractéristique de l'invention, l'embrayage et le moteur sont pilotés de façon à rétablir une accélération (ou un couple de traction) du véhicule proche de l'accélération (ou du couple de traction) après le changement de rapport.

Selon une autre caractéristique de l'invention, l'embrayage et le moteur sont pilotés de façon à rétablir une accélération (ou un couple de traction) du véhicule légèrement inférieure de l'accélération (ou du couple de traction) après le changement de rapport.

Selon une autre caractéristique de l'invention, l'embrayage et le moteur thermique sont pilotés de façon à annuler le glissement de l'embrayage sans à-coups lors du réembrayage.

Selon une autre caractéristique de l'invention, l'embrayage et le moteur thermique sont pilotés de façon à avoir une accélération du moteur proche de zéro lors de l'annulation du glissement.

Selon une autre caractéristique de l'invention, le calculateur de la transmission dialogue avec le calculateur de contrôle du moteur et pilote l'embrayage pour contrôler le glissement de l'embrayage ou le régime moteur lors du réembrayagc.

Selon une autre caractéristique de l'invention, le calculateur de la transmission envoie des consignes de couples ou de régime au calculateur du moteur lors du changement de rapport en général et lors du réembrayage en particulier.

Selon une autre caractéristique de l'invention, la décélération du régime moteur est contrôlée par le calculateur de la transmission par l'intermédiaire des consignes de couples ou de régimes entre le dégagement du rapport courant et l'engagement du rapport cible.

D'autres caractéristiques de l'invention apparaîtront à la lecture de la description détaillée qui suit pour la compréhension de laquelle on se reportera aux dessins annexés suivants :

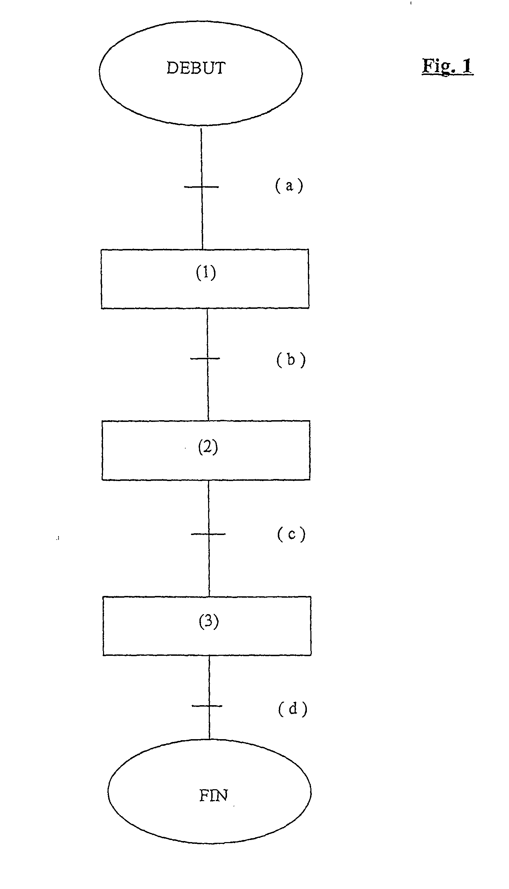

- la figure 1 est une décomposition schématique d'un changement de rapport N/N+1 ou N/N+2, tel qu'il s'effectue communément.
- la figure 2 est une décomposition schématique de la seconde phase, caractéristique du réembrayage anticipé.

Le découpage d'un changement de rapport entre une phase initiale 1, qui va par un débrayage et une décharge du couple moteur nous permettre de transformer la décision (a) d'effectuer un changement de rapport N/N+1 ou N/N+2 en une situation (b) d'ouverture d'embrayage, une phase 2, qui elle va engager le rapport cible N+1 ou N+2 (c) de par le passage de la vitesse, soit successivement le dégagement du rapport, la sélection, la synchronisation et l'engagement, et une ultime phase 3, étape de réembrayage conduisant à une fermeture complète (d) de l'embrayage tout en remettant du couple moteur, est connue de l'art antérieur.

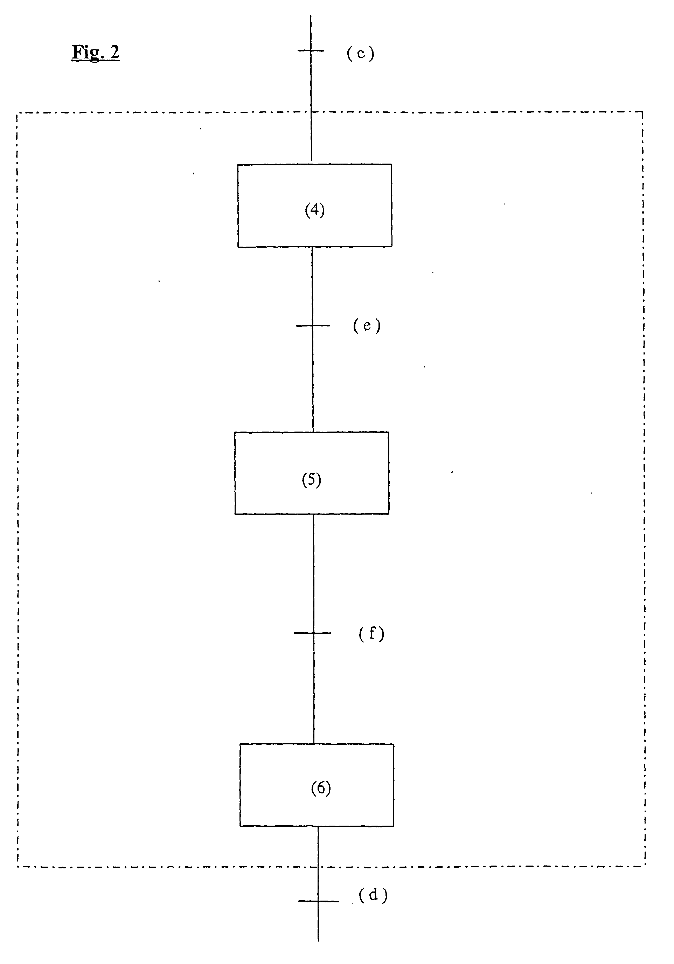

La présente invention porte sur l'étape de réembrayage. La figure 2 détaille cette phase 3, exécutée en trois étapes dans les termes de l'invention.

La stratégie de réembrayage anticipée, objet de l'invention, prend effet dès que le rapport cible N+1 ou N+2 est engagé (c). L'étape 4 procède alors à une fermeture partielle rapide de l'embrayage. On fait dans le même temps croître les couples transmis par l'embrayage et fourni par le moteur rapidement jusqu'à un niveau d'estompage, niveau pouvant dépendre du point de fonctionnement, de variables issues du véhicule (vitesse véhicule, couple moteur...) et de variables issues d'une analyse du style de conduite (sportivité,...). La condition (e) de passage à l'étape 5 est d'avoir obtenu par la précédente opération une accélération ou un couple de sortie proche et idéalement légèrement inférieur à respectivement l'accélération ou le couple de sortie théorique de fin du changement de rapport.

Une étape de contrôle 5 succède alors à l'étape 4, pendant laquelle l'unique objectif était la rapidité d'exécution. Pendant l'étape 5, on contrôle le glissement de l'embrayage jusqu'à le rendre nul (f) par une action sur les couples fourni par le moteur et transmis par l'embrayage : simultanément, la consigne de couple moteur est remise au couple demandé par le conducteur suivant une loi dépendant du glissement, de variables issues du véhicule (vitesse véhicule, couple moteur...) et de variables issues d'une analyse du style de conduite (sportivité, ...), et l'embrayage est piloté pour annuler le glissement de l'embrayage et minimiser l'écart entre les accélérations du moteur et de l'arbre primaire de transmission. Cette phase sert à rétablir le couple traction du véhicule en imposant le couple d'embrayage et à faire chuter rapidement le régime moteur pour limiter la dissipation d'énergie dans l'embrayage.

L'ultime étape 6 consiste alors à fermer complètement l'embrayage. Cette phase démarre lorsque les régimes moteur et primaire sont pratiquement égaux. L'embrayage peut être fermé rapidement sans que des à-coups soient ressentis.

Les consignes de couple moteur restent égales au couple qu'aurait délivré le moteur sans intervention de la transmission automatisée.

La solution proposée est applicable à tout véhicule équipé d'une transmission automatisée et d'un moteur thermique à essence ou diesel.

La transmission automatisée est munie d'un calculateur contrôlant l'actionnement de l'embrayage d'entrée et la mécanique interne de boîte. Le moteur à combustion essence ou diesel est muni d'un boîtier papillon motorisé, contrôlé par un calculateur. Le calculateur de la transmission émet des requêtes de couples lent et rapide pendant les changements de rapports vers le calculateur de contrôle du moteur, et ce dernier assure le fonctionnement du moteur et est capable d'agir sur le boîtier papillon motorisé, l'avance à l'allumage pour les moteurs essence et sur le débit de gasoil pour les moteur diesel, en fonction desdites requêtes de couples lent et rapide.

Les fonctions assurées par les deux calculateurs de contrôle moteur et boîte de vitesses robotisée peuvent être implémentées dans un calculateur unique.

En conclusion, l'invention permet de réduire le temps de trou de couple qui correspond au temps pendant lequel l'accélération du véhicule ne correspond pas à celle demandée par le conducteur. La rapidité recherchée est essentielle pour une sensation de temps de rupture de couple très court. En effet, dès que le véhicule atteint son accélération d'après le changement de rapport, le conducteur aura la sensation que le changement de rapport est terminé même si l'embrayage est encore glissant.

L'invention n'est nullement limitée au mode de réalisation décrit et illustré qui n'a été donné qu'à titre d'exemple.

## Revendications

**1.** Procédé de changement de rapport montant sur transmission automatisée munie d'un embrayage d'entrée et placée sous le contrôle d'un calculateur, comprenant une phase initiale de débrayage (1), une phase de passage de vitesse (2) et une phase de réembrayage (3), **caractérisé en ce que** ladite phase de réembrayage (3) comprend une première étape (4) pendant laquelle se déroulent une fermeture partielle rapide de l'embrayage et une croissance du couple moteur, ce qui entraîne le rétablissement de l'accélération, et une deuxième étape de contrôle (5) durant laquelle le glissement de l'embrayage est régulé par une action sur les couples fournis par le moteur et transmis par l'embrayage.

**2.** Procédé de changement de rapport montant selon la revendication 1, **caractérisé en ce que** l'embrayage et le moteur sont pilotés simultanément pendant la première étape (4) de façon à rétablir rapidement l'accélération ou le couple de traction du véhicule, dès que le rapport N+1 ou N+2 est engagé.

**3.** Procédé de changement de rapport montant selon la revendication 1 ou 2, **caractérisé en ce que** l'embrayage et le moteur sont pilotés de façon à rétablir une accélération ou un couple de traction du véhicule proche respectivement de l'accélération ou du couple de traction après le changement de rapport.

**4.** Procédé de changement de rapport montant selon la revendication 3, **caractérisé en ce que** l'embrayage et le moteur sont pilotés de façon à rétablir une accélération ou un couple de traction du véhicule légèrement inférieur respectivement de l'accélération ou du couple de traction après le changement de rapport.

**5.** Procédé de changement de rapport montant selon l'une des revendications précédentes, **caractérisé en ce que** l'embrayage et le moteur sont pilotés de façon à annuler le glissement de l'embrayage sans à-coups en fin de changement de rapport.

**6.** Procédé de changement de rapport montant selon la revendication 5, **caractérisé en ce que** l'embrayage et le moteur sont pilotés de façon à avoir une accélération du moteur proche de zéro lors de l'annulation du glissement.

**7.** Procédé de changement de rapport montant selon l'une des revendications précédentes, **caractérisé en ce que** le calculateur de la transmission dialogue avec le calculateur de contrôle du moteur et pilote l'embrayage pour contrôler le glissement de l'embrayage ou le régime moteur lors du réembrayage.

**8.** Procédé de changement de rapport montant selon la revendication 7, **caractérisé en ce que** le calculateur de la transmission envoie des consignes de couples ou de régime au calculateur du moteur thermique lors du réembrayage.

**9.** Procédé de changement de rapport montant selon la revendication 7, **caractérisé en ce que** la décélération du régime moteur est contrôlée par le calculateur de la transmission par l'intermédiaire des consignes de couples ou de régimes entre le dégagement du rapport courant et l'engagement du rapport cible.

## Claims

**1.** An upward gear change process on an automated transmission provided with an input clutch placed under the control of a computer, comprising an initial clutch disengagement phase (1), a gear shift phase (2) and a clutch re-engagement phase (3), **characterised in that** said clutch re-engagement phase (3) comprises a first step (4) during which partial rapid closure of the clutch and an increase in the engine torque take place, which gives rise to re-establishment of acceleration, and a second control step (5) during which the slip of the clutch is regulated by an action on the torques produced by the engine and transmitted by way of the clutch.

**2.** An upward gear change process according to claim 1 **characterised in that** the clutch and the engine are pilot-controlled simultaneously during the first step (4) so as to rapidly re-establish acceleration or the traction torque of the vehicle as soon as the ratio N+1 or N+2 is engaged.

**3.** An upward gear change process according to claim 1 or claim 2 **characterised in that** the clutch and the engine are pilot-controlled in such a way as to re-establish an acceleration or a traction torque of the vehicle respectively close to the acceleration or the traction torque after the gear change.

**4.** An upward gear change process according to claim 3 **characterised in that** the clutch and the engine are pilot-controlled in such a way as to re-establish an acceleration or a traction torque of the vehicle respectively slightly less than the acceleration or the traction torque after the gear change.

**5.** An upward gear change process according to one of the preceding claims **characterised in that** the clutch and the engine are pilot-controlled in such a way as to nullify the slip of the clutch without jerks at the end of the gear change.

**6.** An upward gear change process according to claim 5 **characterised in that** the clutch and the engine are pilot-controlled in such a way as to have an acceleration of the engine close to zero when the slip is nullified.

**7.** An upward gear change process according to one of the preceding claims **characterised in that** the computer of the transmission talks to the computer for controlling the engine and pilot-controls the clutch to control the slip of the clutch or the engine speed upon clutch re-engagement.

**8.** An upward gear change process according to claim 7 **characterised in that** the computer of the transmission sends torque or speed references to the computer of the heat engine upon clutch re-engagement.

**9.** An upward gear change process according to claim 7 **characterised in that** deceleration of the engine speed is controlled by the computer of the transmission by way of the references in respect of torques or speeds between disengagement of the current gear and engagement of the target gear.

## Patentansprüche

**1.** Verfahren zum Wechseln auf einen höheren Gang eines automatischen Getriebes, welches mit einer Eingangskupplung ausgestattet ist und der Steuerung eines Rechners unterworfen ist, aufweisend eine Anfangsphase einer Auskupplung (1), eine Phase eines Gangwechsels (2) und eine Phase einer Wiedereinkupplung (3), **dadurch gekennzeichnet, dass** die Phase der Wiedereinkupplung (3) einen ersten Schritt (4) aufweist, während welchem ein teilweises schnelles Schließen der Kupplung und ein Anstieg des Motormoments ablaufen, was zu der Wiederherstellung der Beschleunigung führt, und einen zweiten Schritt einer Steuerung (5), während welchem das Gleiten der Kupplung durch eine Einwirkung auf die durch den Motor gelieferten und durch die Kupplung übertragenen Momente geregelt wird.

2. Verfahren zum Wechseln auf einen höheren Gang nach Anspruch 1, **dadurch gekennzeichnet, dass** die Kupplung und der Motor simultan während dem ersten Schritt (4) derart gesteuert werden, um schnell die Beschleunigung oder das Traktionsmoment des Fahrzeugs wiederherzustellen, sobald der Gang N+1 oder N+2 eingelegt ist.

3. Verfahren zum Wechseln auf einen höheren Gang nach Anspruch 1 oder 2, **dadurch gekennzeichnet, dass** die Kupplung und der Motor derart gesteuert werden, um eine Beschleunigung oder ein Traktionsmoment des Fahrzeugs jeweils nahe der Beschleunigung oder des Traktionsmoments nach dem Gangwechsel wiederherzustellen.

4. Verfahren zum Wechseln auf einen höheren Gang nach Anspruch 3, **dadurch gekennzeichnet, dass** die Kupplung und der Motor derart gesteuert werden, um eine Beschleunigung oder ein Traktionsmoment des Fahrzeugs leicht niedriger jeweils von der Beschleunigung oder dem Traktionsmoment nach dem Gangwechsel wiederherzustellen.

5. Verfahren zum Wechseln auf einen höheren Gang nach einem der vorangegangenen Ansprüche, **dadurch gekennzeichnet, dass** die Kupplung und der Motor derart gesteuert werden, um das Gleiten der Kupplung ohne Ruck am Ende des Gangwechsels außer Kraft zu setzen.

6. Verfahren zum Wechseln auf einen höheren Gang nach Anspruch 5, **dadurch gekennzeichnet, dass** die Kupplung und der Motor derart gesteuert werden, um eine Beschleunigung des Motors nahe null während der Außerkraftsetzung des Gleitens zu haben.

7. Verfahren zum Wechseln auf einen höheren Gang nach einem der vorangegangenen Ansprüche, **dadurch gekennzeichnet, dass** der Rechner des Getriebes mit dem Steuerungsrechner des Motors kommuniziert und die Kupplung zum Steuern des Gleitens der Kupplung oder der Motordrehzahl während der Wiedereinkupplung steuert.

8. Verfahren zum Wechseln auf einen höheren Gang nach Anspruch 7, **dadurch gekennzeichnet, dass** der Rechner des Getriebes Momentensollwerte oder Drehzahlsollwerte zum Rechner des Verbrennungsmotors während der Wiedereinkupplung sendet.

9. Verfahren zum Wechseln auf einen höheren Gang nach Anspruch 7, **dadurch gekennzeichnet, dass** die Verzögerung der Motordrehzahl durch den Rechner des Getriebes über Momentensollwerte oder Drehzahlsollwerte zwischen dem Herausgehen des laufenden Gangs und dem Einlegen des Zielgangs gesteuert wird.

Fig. 1

DEBUT

( a )

(1)

( b )

(2)

( c )

(3)

( d )

FIN

**Fig. 2**